# EUROPÄISCHE PATENTSCHRIFT

(11) **EP 2 093 537 B1**
(45) Veröffentlichungstag und Bekanntmachung des Hinweises auf die Patenterteilung: **17.10.2012**
(21) Anmeldenummer: 09153530.2
(22) Anmeldetag: 24.02.2009
(51) Int. Cl.: G01B 11/27

(54) **Verfahren und Vorrichtung zur Ermittlung einer Ausrichtung von zwei drehbar gelagerten Maschinenteilen**
Process and device for the determination of the alignment of two rotatable machine parts
Système et procédé pour déterminer l'alignement de deux pièces de machine rotatives

(30) Priorität: 25.02.2008 DE 102008010916
(43) Veröffentlichungstag der Anmeldung: 26.08.2009
(73) Patentinhaber: PRÜFTECHNIK Dieter Busch AG, 85737 Ismaning (DE)
(72) Erfinder: Glaser, Bernhard Otto Rudolf, 85737 Ismaning (DE)

(56) Entgegenhaltungen:
- EP-A- 1 248 071
- WO-A-03/067187
- DD-A7- 290 783
- DE-A1- 3 911 307
- US-A1- 2007 253 002

## Beschreibung

Die Erfindung betrifft ein Verfahren zur Ermittlung einer Ausrichtung von zwei drehbar gelagerten Maschinenteilen, unter Kupplungsspiel zwischen den zwei gekoppelten Maschinenteilen, sowie eine Vorrichtung zur Ermittlung einer Ausrichtung von zwei drehbar gelagerten Maschinenteilen, unter kupplungsspiel zwischen den zwei gekoppelten Maschinenteilen.

In vielen technischen Gebieten besteht die Aufgabe, die Raum- und/oder Winkellage zweier drehbar gelagerter Maschinenteile, insbesondere zweier rotierender Wellen, relativ zueinander zu bestimmen. So besteht z.B. bei der Kalibration und Einstellung von Werkzeugmaschinen der Bedarf, Maschinenspindeln hochgenau zueinander auszurichten, was eine genaue Bestimmung der relativen Raum- und Winkellagen der Spindeln zueinander voraussetzt. Weiterhin weisen viele Antriebssysteme zur Momenten- und/oder Kraftübertragung aneinandergekoppelte Wellen auf, deren Relativausrichtung optimiert werden muss, um den Verschleiß des Antriebssystems möglichst gering zu halten.

Oftmals sind die zu vermessenden rotierenden Maschinenteile durch ein Kupplungselement miteinander verbunden. Die relative Ausrichtung der beiden Maschinenteile hat dabei einen großen Einfluß auf die Betriebsbelastung des Kupplungselements: Je höher die Fehlausrichtung der beiden Maschinenteile zueinander ist, desto höher sind die Kräfte und Momente, denen das Kupplungselement während des Betriebs ausgesetzt ist. Daher ist es wichtig, die Relativausrichtung der beiden rotierenden Maschinenteile hochgenau zu bestimmen, um durch eine Justierung der Rotationsachsen die Winkelabweichung und den räumlichen Versatz zwischen den Maschinenteile minimieren zu können.

Aus dem Stand der Technik sind unterschiedliche Verfahren und Vorrichtungen bekannt, mit deren Hilfe die Relativausrichtung zweier Maschinenteile überprüft, vermessen und beurteilt werden kann. Hierzu wird beispielsweise auf die DE 38 14 466 A1, die DE 101 22 321 A1 und die EP 1 248 071 A2 verwiesen.

Dokument DD 290 783 A7 beschreibt die Messung des Verdrehungswinkels freibeweglicher (also nicht gekoppelter) Objekte um die Verbindungsachse mittels eines flächig aufgeweiteten Laserstrahls und zweier basisbildender Elemente, die Empfängerzeilen wie CCD-Sensoren sein können. Die WO 03/067 187 A1 beschreibt eine Vorrichtung zur Ermittlung der relativen Ausrichtung zweier Riemenscheiben zueinander. S.6, 3. Absatz beschreibt, dass der Riemen entweder auf den Scheiben bleibt und so eine feste Kopplung der Scheiben herstellt, oder entfernt ist, wodurch die Kopplung unterbrochen ist.

Aus der DE 39 11 307 A1 ist bereits ein Verfahren zum Feststellen, ob zwei hintereinander angeordnete Wellen hinsichtlich ihrer Mittelachse fluchten oder versetzt sind bekannt, wobei bei der Ermittlung die erste Messeinheit an dem ersten Maschinenteil befestigt ist, und die zweite Messeinheit an dem zweiten Maschinenteile befestigt ist, so dass der punktförmige Lichtstrahl auf die Detektoreinheit auftrifft und dass ein von dem punktförmigen Lichtstrahl erzeugtes Lichtmuster zur Bestimmung einer Fehlausrichtung der Achsen der Maschinenteile relativ zu einander ausgewertet wird, wobei zur Bestimmung der Fehlausrichtung die Auftreffpunkte des punktförmigen Lichtstrahls auf den Zeilensensoren verwendet werden. Die Messsignale in den einzelnen Messwinkelpositionen werden für jede Welle gesondert als Signale erzeugt, die zu den Abstandskomponenten proportional sind, die die Mittelachsen der Wellen in einer der jeweiligen Welle fest zugeordneten, zu dieser im wesentlichen senkrechten Ebene (Messebene) in der durch die jeweilige Messposition Mess-Winkelposition festgelegten radialen Richtung voneinander aufweisen. Ferner wird zum Erzeugen der Messignale in den einzelnen Messwinkelpositionen von jeder der beiden Wellen ein Messzeiger zu der jeweils anderen Welle gerichtet, der sich jeweils in den Bereichen eines zugehörigen Referenzelementes auf dieser Annahmewelle erstreckt, das ein Signal liefert, das dem radialem Abstand der Mittelachse des Messzeigers von einem Bezugspunkt in einer zur Mittelachse dieser anderen Welle etwa senkrechten Ebene des Referenzelements entspricht.

Eine besonders präzise messende Vorrichtung zur Bestimmung der Ausrichtung zweier Maschinenteile unter Verwendung eines optischen Verfahrens ist in der DE 10 2006 020 358 A1 beschrieben. Diese Vorrichtung umfasst eine Lichtquelle, die einen mehrfach aufgefächerten Lichtstrahl aussendet, so dass der Querschnitt dieses ausgesendeten Lichtstrahls die Form eines Fadenkreuzes aufweist. Die Vorrichtung umfasst weiterhin eine Detektoreinheit mit mindestens drei Sensor-Arrays oder positionsempfindlichen Dioden zur direkten oder indirekten Bestimmung von Auftreffpunkten des in zwei oder mehreren Ebenen aufgeweiteten Lichtstrahles. Zur Messung der relativen Ausrichtung der beiden Maschinenteile werden die Lichtquelle auf dem ersten Maschinenteil und die Detektoreinheit auf dem anderen Maschinenteil befestigt. Werden nun die beiden Maschinenteile mit der auf ihnen befestigten Lichtquelle bzw. Detektoreinheit synchron gedreht, so gestattet die Vorrichtung der DE 10 2006 020 358 A1 eine hochgenaue Bestimmung der Raum- und Winkellage des ersten Maschinenteils relativ zum zweiten Maschinenteil.

Aus der EP 1 698 855 A1 ist ein Verfahren zum Ausrichten von Maschinen und Maschinenelementen oder dergleichen, insbesondere von Rohren oder Hohlzylindern bekannt, wobei in einer von zwei Messphasen bei fixierter Lichtsende- und Empfangsvorrichtung eine Drehung eines Reflektor-Prismas in mindestens drei beliebig wählbare Drehpositionen samt zugehöriger Datenerfassung stattfindet und in der anderen der beiden Messphasen bei fixierten Reflektor- Prisma eine Drehung der Lichtsende- und Empfangsvorrichtung in entweder zwei vordefinierte rechtwinklig aufeinander stehende Drehlagen oder aber drei oder mehr beliebig wählbare Drehpositionen damit zugehöriger Datenerfassung stattfindet.

Die bekannten Vorrichtungen sind jedoch entweder relativ aufwendig oder die Genauigkeit der Messung ist nicht besonders hoch.

Es stellt sich ferner heraus, dass die Messung empfindlich gestört wird, wenn zwischen den beiden gekoppelten Maschinenteilen ein Kupplungsspiel vorliegt: In diesem Fall verfälscht das Kupplungsspiel die ermittelten Werte der relativen Raum- und Winkellagen der beiden Maschinenteile.

Der Erfindung liegt daher die Aufgabe zugrunde die Ausrichtung von zwei drehbar gelagerten Maschinenteilen zu ermöglichen, die relativ einfach und gleichzeitig höchst präzise ist.

Die Aufgabe wird durch die Merkmale der unabhängigen Ansprüche gelöst.

Bei dem Verfahren zur Ermittlung einer Ausrichtung von zwei drehbar gelagerten Maschinenteilen mit einer ersten Messeinheit mit einer Lichtquelle zur Aussendung eines in einer Ebene aufgeweiteten Lichtstrahs und einer zweiten Messeinheit mit einer optischen Detektoreinheit, welche aus zwei parallel zueinander angeordneten Zeilensensoren besteht, ist vorgesehen, dass bei der Ermittlung die erste Messeinheit an dem ersten Maschinenteil befestigt ist, und die zweite Messeinheit an dem zweiten Maschinenteile befestigt ist, so dass der flächig aufgeweitete Lichtstrahl parallel zur Achse des ersten Maschinenteils ausgerichtet wird und auf die Detektoreinheit auftrifft und dass

ein von dem flächig aufgeweiteten Lichtstrahl erzeugtes Lichtmuster zur Bestimmung einer Fehlausrichtung der Achsen der Maschinenteile relativ zu einander ausgewertet wird, wobei zur Bestimmung der Fehlausrichtung die Auftreffpunkte des flächig aufgeweiteten Lichtstrahls auf den Zeilensensoren verwendet werden, dass die Maschinenteile durch ein kupplungselement lose gekoppelt sind und bei einem bei einer Drehung zumindest eines der Maschinenteile auftretenden Kupplungsspiel ein korrekturwert für die Auftreffpunkte des Lichtstrahls auf den Zeilensensoren ermittelt wird. Vorteilhafte Ausgestaltungen sind Gegenstand der Unteransprüche.

Das erfindungsgemäße Verfahren nutzt bei drehbaren Maschinenteilen eine Messvorrichtung mit einer Lichtquelle und einer optisch messenden Detektoreinheit, wobei die Lichtquelle am ersten Maschinenteil und die Detektoreinheit am zweiten Maschinenteil befestigt werden. Die Lichtquelle sendet einen flächig aufgefächerten Lichtstrahl aus, dessen Abbild auf der der Lichtquelle gegenüber liegenden Detektoreinheit die Form einer geraden Linie hat. Wird nun das erste Maschinenteil gedreht, folgt der Lichtstrahl der Rotation des ersten Maschinenteils. Die vom aufgefächerten Lichtstrahl auf der Detektoreinheit erzeugte Lichtlinie vollführt dabei zunächst eine Drehbewegung, die - nach Überwindung des Kupplungsspiels - in eine Relativbewegung übergeht, deren Größe durch Winkel- und Lateralversatz der Achsen der beiden Maschinenteile bestimmt ist.

Die Detektoreinheit weist vorteilhafterweise zwei parallel zueinander angeordnete Zeilensensoren, insbesondere CCD-Zeilenarrays oder positionsempfindliche Dioden (PSDs) auf, die in einer solchen Weise gegenüber der Lichtquelle angeordnet sind, dass der aufgefächerte Lichtstrahl näherungsweise senkrecht zu ihnen verläuft, so dass das auf dem Detektorelement erzeugte linienförmige Abbild des Lichtstrahls die beiden Zeilenarrays näherungsweise senkrecht und mittig schneidet; die Auftreffpunkte des aufgefächerten Lichtstrahls auf den Zeilensensoren wandern dann bei Drehungen des aufgefächerten Lichtstrahls gegenüber der Detektoreinheit entlang der Zeilensensoren, verlassen diese jedoch nicht. Aus dieser Wanderung der Auftreffpunkte auf den Zeilensensoren während der Drehung des ersten Maschinenteils kann eine Fehlausrichtung bestimmt werden.

Im Unterschied zum beispielsweise aus der DE 39 11 307 A1 oder US 5,026,998 bekannten Stand der Technik ist der Laserstrahl nicht punktförmig, sondern wird zu einer Linie aufgeweitet, die tangential zu einem Kreis um die Drehachse verläuft. Durch den Einsatz von zwei parallelen Zeilensensoren kann die Gesamtgenauigkeit erhöht werden da Fehler herausgerechnet werden können.

Bevorzugt ist eine besonders genau messende Ausführungsform des Verfahrens, wobei

eine dritte Messeinheit mit einer Lichtquelle zur Aussendung eines in einer Ebene aufgeweiteten Lichtstrahls

und eine vierte Messeinheit mit einer optischen Detektoreinheit, welche aus zwei parallel zueinander angeordneten Zeilensensoren besteht, verwendet werden, und wobei

bei der Ermittlung die vierte Messeinheit an den ersten Maschinenteil befestigt ist, und die dritte Messeinheit an dem zweiten Maschinenteile befestigt ist, so dass der flächig aufgeweitete Lichtstrahl der Lichtquelle der dritten Messeinheit auf die Detektoreinheit der vierten Messeinheit auftrifft und dass

bei einer Drehung zumindest eines der Maschinenteile um seine Achse, ein von dem flächig aufgeweiteten Lichtstrahl erzeugtes Lichtmuster zur Bestimmung einer Fehlausrichtung der Achsen der Maschinenteile relativ zu einander ausgewertet wird, wobei zur Bestimmung der Fehlausrichtung die Auftreffpunkte zumindest eines der flächig aufgeweiteten Lichtstrahlen auf den Zeilensensoren verwendet werden.

Das zweite Maschinenteil ist bei lose gekoppelten Maschinenteilen mit Kupplungsspiel zunächst in Ruhe. Es zeigt sich, dass dann die Wanderbewegung dieser Auftreffpunkte zunächst näherungsweise linear zum Drehwinkel des ersten Maschinenteils verläuft, bis - mit Überwindung des Kupplungsspiels - die Wanderbewegung eine andere Charakteristik annimmt. Vorteilhafterweise werden daher zur Berechnung des Kupplungsspiels die Endwerte der quasilinearen Wanderbewegung der Auftreffpunkte des aufgefächerten Lichtstrahls auf den Zeilensensoren verwendet. Eine Messung der Bewegung der Lichtlinie auf der Detektoreinheit während des Anlaufs des ersten Maschinenteils ermöglicht somit die Bestimmung des Kupplungsspiels zwischen den beiden Maschinenteilen. Eine Berücksichtigung des Kupplungsspiels bei der Ermittlung des Ausrichtzustandes erfolgt bei jeder Drehstellung der Welle.

Weiterhin ist es vorteilhaft, in einem folgenden Verfahrensschritt nach der Bestimmung des Kupplungsspiels auch eine Ermittlung der Ausrichtung der beiden Maschinenteile durchzuführen. Das Verfahren gestattet es damit, sowohl das Kupplungsspiel als auch die relative Ausrichtung zweier gekoppelter, drehbar gelagerter Maschinenteile hochgenau zu bestimmen.

Gemäß der Erfindung kann bei einer Drehung mit Kupplungsspiel erfindungemäß ein Korrekturwert für die Auftreffpunkte des Lichtstrahls auf den Zeilensensoren ermittelt werden. Bei einem Abstand I der Zeilensensoren und einem Kupplungsspiel mit einem Winkel des Kupplungsspiels Δβ besteht zwischen den Messwerten der Auftreffpunkte des Lichtstrahls auf den ersten Zeilensensor E1 und dem zweiten Zeilensensor E2 und Δβ der Zusammengang tanΔβ = (E2 - E1)/2I, falls die Verbindungsgerade der Auftreffpunkte des Laserbündels auf den Zeilensensoren zu Beginn der Drehung senkrecht zu den Zeilensensoren orientiert liegt.

Falls der Laser mit einer Aufspannhöhe von R relativ zur Drehachse des Maschinenteils angeordnet ist, ergibt sich bei einem Kupplungsspiel β für den korrigierten Wert γ der Auftreffpunkte des Lichtstrahls auf die Zeilensensoren γ = E1 + (E2 - E1)/2 - R(sinΔβ * tanΔβ + cosΔβ - 1). Zur Ermittlung einer Ausrichtung erfolgt die Messung vorzugsweise für drei verschiedene Winkelstellungen der Maschinenteile relativ zueinander.

Die Maschinenteile sind bei der Ermittlung der Ausrichtung durch ein Kupplungselement lose gekoppelt, wobei ein externes Drehmoment nur auf eines der Maschinenteile ausgeübt wird. Das Kupplungselement kann beispielsweise ein zwischen den Maschinenteilen angeordneter Bolzen sein. Das andere Maschinenteil ist lediglich gelagert. Nach Überwindung des Kupplungsspiels verhält sich das Kupplungselement elastisch, vorzugsweise wie eine Feder mit einem linearen Kraftgesetz. Daher kommt es zu einer Relativbewegung des zweiten Maschinenteils mit einer der durch das externe Drehmoment aufgeprägten Drehrichtung entgegen gesetzten Drehrichtung des zweiten Maschinenteils, die der durch das erste Maschinenelement bewirkten Drehbewegung überlagert ist, sobald das elastische Kupplungselement zurück schwingt. Dieser Relativbewegung entspricht ebenfalls ein Kupplungsspiel - in entgegen gesetzter Drehrichtung zur Anfangsdrehrichtung - welches zu einer Verfälschung der Messwerte der Auftreffpunkte führt, welches erfindungsgemäß korrigiert werden kann.

Das erfindungsgemäße Verfahren kann insbesondere zur Bestimmung eines Kupplungsspiels zwischen zwei gekoppelten Maschinenteilen in einem Messroboter oder einem Koordinatenmeßgerät eingesetzt werden. Weiterhin eignet sich das erfindungsgemäße Verfahren zur Bestimmung des Kupplungsspiels und - bei geeignet gestalteter Messeinrichtung - zum gleichzeitigen Ausrichten zweier gekoppelter Wellen in einer beliebigen Kraftübertragungseinheit, insbesondere einem Motor einer Pumpe oder einem Getriebe.

Die Erfindung umfasst ferner Vorrichtungen entsprechend den unabhängigen Vorrichtungsansprüchen.

Wenn, gegebenenfalls die erste und vierte Messeinheit sowie die zweite und dritte Messeinheit jeweils in einem Messkopf angeordnet sind, vereinfacht dies die Fertigung und Handhabung bei der Ausführung der entsprechenden Vorrichtungen.

Nach der Bestimmung des Kupplungsspiels ist es erfindungsgemäß möglich, auch eine Ermittlung der Ausrichtung der beiden Maschinenteile durchzuführen. Das Verfahren gestattet es damit, sowohl das Kupplungsspiel als auch die relative Ausrichtung zweier gekoppelter, drehbar gelagerter Maschinenteile hochgenau zu bestimmen.

Im Folgenden wird die Erfindung anhand eines in den Figuren dargestellten Ausführungsbeispiels näher erläutert. Dabei zeigen:
- Fig. 1: eine perspektivische schematisierte Ansicht auf eine Messvorrichtung zur Ermittlung einer Ausrichtung von zwei drehbar gelagerten Maschinenteilen mit einer einen einfach flächig aufgeweiteten Lichtstrahl aussendenden Lichtquelle und einer Detektoreinheit mit zwei Zeilensensoren, die auf den Maschinenteilen montiert sind;
- Fig. 2: eine schematische Schnittdarstellung einer Messvorrichtung mit zwei Lichtquellen und zwei Detektoreinheiten;
- Fig. 3: ein Diagramm der Lage der Auftreffpunkte des fächerförmigen Lichtbündels auf zwei einander gegenüberliegenden Zeilensensoren als Funktion des Drehwinkels.

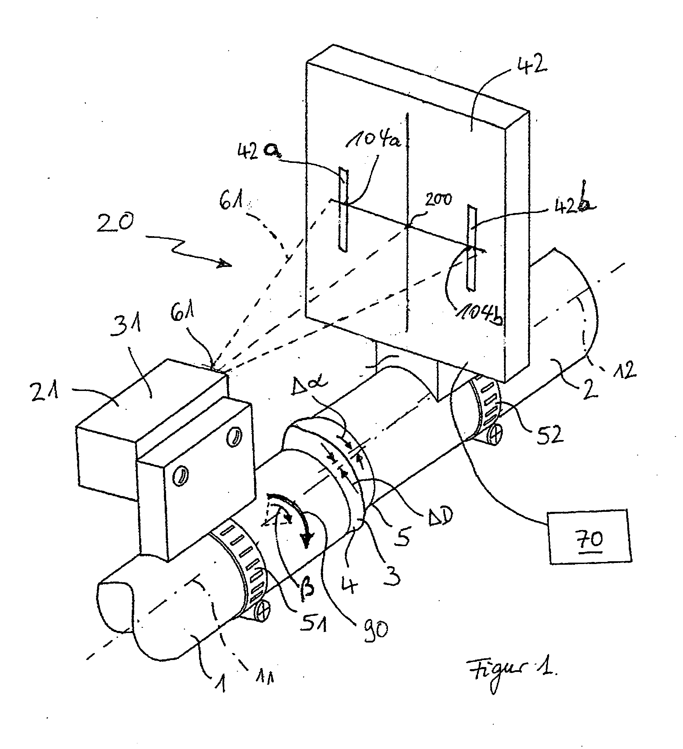

Figur 1 zeigt zwei drehbar gelagerte Maschinenteile 1 und 2, insbesondere Wellen, mit Drehachsen 11, 12. Die Maschinenteile 1, 2 sind durch ein Kupplungselement 3 mit Kupplungshälften 4, 5 lose aneinander gekoppelt.

Die beiden Maschinenteile 1, 2 sind näherungsweise parallel und fluchtend angeordnet, weisen jedoch im allgemeinen einen Versatz ΔD zueinander auf; weiterhin schließen die Drehachsen 11, 12 der beiden Maschinenteile 1, 2 im allgemeinen einen Winkel Δα miteinander ein. Je größer der Versatz ΔD bzw. der Winkel Δα ist, desto höher ist die Belastung des Kupplungselements 3 während des Betriebs. Der Versatz ΔD bzw. der Winkel Δα der Maschinenteile 1, 2 sind in Figur 1 stark überhöht dargestellt.

Zur Ermittlung der relativen Ausrichtung der Maschinenteile 1, 2 wird die in Figur 1 gezeigte Messvorrichtung 20 verwendet, deren Aufbau und Funktionsweise analog der in der DE 39 11 307 A1 beschriebenen sind. Im Unterschied zu diesem Stand der Technik ist jedoch erfindungsgemäß der Laserstrahl nicht punktförmig, sondern wird zu einer Linie aufgeweitet, die tangential zu einem Kreis um die Drehachse 11 verläuft.

Die Messvorrichtung 20 besteht aus zwei Einheiten 21, 42, wobei die erste Einheit 21 eine Lichtquelle 31 darstellt, während die zweite Einheit 42 eine Detektoreinheit zur Messung der von der Lichtquelle 31 ausgesandten Strahlung darstellt. Die Lichtquelle 31 ist ein Laser, der mit einer (in Figur 1 nicht gezeigten) Optik zur Erzeugung eines nach vorne orientierten, fächerförmigen Laserlichtbündels 61 versehen ist. Die Detektoreinheit 42 umfasst zwei Zeilensensoren 42a, 42b, die parallel zu einander angeordnet sind. Die Zeilensensoren 42a, 42b können insbesondere CCD-Zeilenarrays oder positionsempfindliche Dioden (PSDs) sein. Die Detektoreinheit 42 stellt somit ein Empfangsgerät für einen auftreffenden Laserstrahl dar.

Zur Auswertung der Messwerte der Zeilensensoren 42a, 42b ist eine Auswerteeinheit 70 vorgesehen. Bezüglich vorteilhafter Ausgestaltungen, Details und Funktionsweise einer geeigneten Messvorrichtung 42, allerdings mit mehr als zwei Zeilensensoren wird auf die DE 10 2006 020 358 A1 verwiesen.

Zur Durchführung der Ermittlung der Relativausrichtung der Maschinenteile 1, 2 werden die Einheiten 21, 22 mit Hilfe von Halterungen 51, 52 an den zu vermessenden Maschinenteilen 1, 2 befestigt. Dann wird die Lichtquelle 31 und/oder die Detektoreinheit 42 in einer solchen Weise in der Halterung 51, 52 verschoben, dass das fächerförmig aufgeweitete Laserlichtbündel 61 auf beiden Zeilensensoren 42a, 42b der Detektoreinheit 42 auftrifft. Dies ist schematisch in der Figur 1 dargestellt.

Es versteht sich, dass bei einer entsprechenden Drehung des zweiten Maschinenteils analog verfahren werden kann, da es lediglich auf die Relativbewegung der beiden Maschinenteile 1,2 zu einander ankommt.

Wird nun das erste Maschinenteil 1 um seine Achse 11 gedreht (Pfeil 90 in Figur 1), so folgt das über das Kupplungselement 3 angekoppelte zweite Maschinenteil 2 dieser Drehung; die auf dem ersten Maschinenteil 1 befestigte Lichtquelle 31 und die auf dem zweiten Maschinenteil 2 befestigte Detektoreinheit 42 vollführen ebenfalls diese Drehung. Sind die beiden Achsen 11, 12 der Maschinenteile 1, 2 perfekt fluchtend ausgerichtet (d.h. Achsenversatz ΔD = 0 und Achsenwinkel Δα = 0), so ändert sich bei dieser Drehbewegung 90 die Relativposition des Laserlichtbündels 61 gegenüber der Detektoreinheit 42 nicht, so dass die Auftreffpunkte 104a. 104b des Laserlichtbündel 61 in ihren ursprünglichen Positionen der Zeilensensoren 42a, 42b verbleiben.

Besteht allerdings zwischen den beiden Maschinenteilen 1, 2 ein Achsenversatz ΔX ≠ 0 und/oder Achsenwinkel Δα ≠ 0, so wandern bei der Drehbewegung 90 die Auftreffpunkte des Laserlichtbündels 61 auf Zeilensensoren 42a, 42b.

Zur Ermittlung einer Ausrichtung erfolgt die Messung vorzugsweise für drei verschiedene Winkelstellungen der Maschinenteile relativ zueinander.

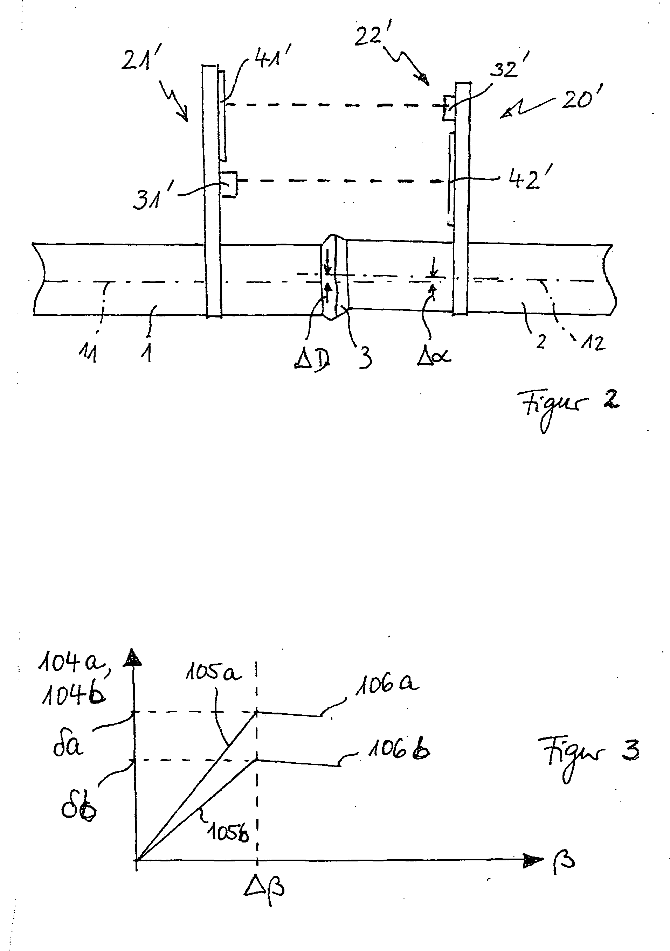

Zur Ermittlung des Achsenversatzes ΔD und des Achsenwinkels Δα wird vorteilhafterweise die in Figur 2 schematisch in einer Schnittdarstellung gezeigte Messvorrichtung 20' verwendet, deren Einheiten 21', 22' je eine Lichtquelle 31', 32' und je eine Detektoreinheit 41', 42' der in Figur 1 gezeigten Art aufweisen, wobei die Messeinheiten 31', 41' und 32',42' vorzugsweise jeweils in einem Messkopf angeordnet sind.

Ungenauigkeiten bzw. Verfälschungen der auf diese Weise ermittelten Messwerte treten auf, wenn aufgrund des die Maschinenteile 1, 2 verbindenden Kupplungselements 3 ein Spiel zwischen diesen Maschinenteilen 1, 2 besteht. Ein solches Kupplungsspiel Δβ muss im Vorfeld bzw. im Zuge der Auswertung der Messwerte extrahiert werden, um die Störeffekte, die das Kupplungsspiel auf die Messung ausübt, zu bestimmen und herausrechnen zu können.

Die Bestimmung des Kupplungsspiels Δβ erfolgt mit Hilfe der in Figur 1 gezeigten Messvorrichtung 20 und beruht auf folgender Überlegung: Wird - ausgehend von der in Figur 1 gezeigten Ursprungslage der Maschinenteile 1, 2 - das Maschinenteil 1 in Pfeilrichtung 90 um einen zunehmenden Winkel β gedreht, so bleibt aufgrund des Kupplungsspiels das Maschinenteil 2 zunächst stationär; dabei wird die auf dem Maschinenteil 1 befestigte Lichtquelle 31 mit dem fächerförmigen Lichtbündel 61 gegenüber der am Maschinenteil 2 befestigten Detektoreinheit 42 gedreht.

Figur 3 zeigt das Verhalten der Auftreffpunkte 104a, 104b des fächerförmigen Lichtbündels 61 auf den Zeilensensoren 42a, 42b als Funktion des zunehmenden Drehwinkels β: Mit wachsendem Drehwinkel β bewegen sich die Schnittpunkte 104a, 104b des Lichtbündels 61 näherungsweise linear mit dem Drehwinkel β. Sobald - beim Erreichen eines durch das Kupplungsspiel bestimmten Drehwinkels Δβ - die Kupplung 3 greift und das Maschinenteil 2 der Drehung des Maschinenteils 1 folgt, folgt auch die Detektoreinheit 42 der Drehung der Lichtquelle 31. Dies äußert sich in Figur 3 dadurch, dass der quasilineare Anstieg 105a, 105b der Auftreffpunkte in einen anderen, wesentlich flacheren oder sogar zu der β -Achse parallelen Kurvenverlauf 106a, 106b übergeht.

Bei einem Abstand I der Zeilensensoren und einem Kupplungsspiel mit einem Winkel Δβ besteht zwischen den Messwerten der Auftreffpunkte E1, E2 des Lichtstrahls auf dem ersten Zeilensensor 42a und dem zweiten Zeilensensor 42b und Δβ der Zusammengang tanΔβ = (E2 - E1)/2I, falls die Verbindungsgerade der Auftreffpunkte des Laserbündels auf den Zeilensensoren zu Beginn der Drehung senkrecht zu den Zeilensensoren orientiert liegt, wie in Figur 1 dargestellt ist. Die Formelgrößen E1 und E2 sind dabei den Auftreffpunkten 104a und 104b zugeordnet.

Falls der Laser mit einer Aufspannhöhe von R relativ zur Drehachse des Maschinenteils 11 angeordnet ist, ergibt sich bei einem Kupplungsspiels Δβ für den korrigierten Wert γ der Auftreffpunkte des Lichtstrahls auf die Zeilensensoren γ = E1 + (E2 - E1)/2 - R (sinΔβ tanΔß + cosΔβ-1).

Zur Herleitung der Formel für den korrigierten Wert wird, in einem geeigneten Koordinatensystem nach Aufstellen der Geradengleichungen für die drei Geraden, die durch die beiden Zeilensensoren sowie den auftreffenden linienförmigen Laserstrahl gebildet werden, eine Rotation der den Laserstrahl darstellenden Geraden um die Drehachse des Maschinenteils durchgeführt. Diese Rotation entspricht der Phase, in der die am zweiten Maschinenteil befestigten Zeilensensoren während der Drehung des ersten Maschinenteils, an dem die Lichtquelle befestigt ist, durch das Kupplungsspiel bedingt noch still stehen.

In analoger Weise wie bei der Ermittlung einer Ausrichtung von zwei drehbar gelagerten Maschinenteilen kann auch bei der Ermittlung der Ausrichtung von zwei hohlylinder - förmigen Maschinenteilen vorgegangen werden.

Eine Vorrichtung mit zwei parallel zu einander angeordneten Zeilensensoren und einem in einer Ebene aufgeweiteten Lichtstrahl kann auch zur Prüfung einer Komponente auf Geradheit entlang einer Längsseite eingesetzt werden. Derartige Komponenten sind beispielsweise Eisenbahnschienen. Eine Vorrichtung weist eine erste Messeinheit mit einer Lichtquelle zur Aussendung eines in einer Ebene aufgeweiteten Lichtstrahls auf. Ferner weist die Vorrichtung eine zweite Maßeinheit mit einer optischen Detektoreinheit, welche aus zwei parallel zueinander angeordneten Zeilensensoren besteht. Bei der Prüfung wird zumindest eine der Messeinheiten entlang der Längsseite bewegt. Bei Abweichungen von der Geradheit kommt es bei der Relativbewegung der Messeinheiten zu einer Änderung der Position der Auftreffpunkte des Lichtstrahls auf den Zeilensensoren, was von einer Auswerteeinheit ausgewertet wird.

Da es während der Relativbewegung der Messeinheiten, beispielsweise durch ein Spiel, zu einer Änderung des Querwinkels zwischen Zeilensensoren und dem Lichtstrahl kommen kann, wird erfindungsgemäß eine Korrektur der ermittelten Messwerte vorgenommen.

Bei einer Änderung des Querwinkels Δβ* ergibt sich für den korrigierten Wert γ* der Auftreffpunkte des Lichtstrahls auf die Zeilensensoren γ = E1 + (E2 - E1)/2 - R(sinΔβ* tanΔβ* + comΔβ* - 1).

## Patentansprüche

1. Verfahren zur Ermittlung einer Ausrichtung von zwei drehbar gelagerten Maschinenteilen mit einer ersten Messeinheit mit einer Lichtquelle zur Aussendung eines in einer Ebene aufgeweiteten Lichtstrahls
und einer zweiten Messeinheit mit einer optischen Detektoreinheit, welche aus zwei parallel zueinander angeordneten Zeilensensoren besteht,
wobei bei der Ermittlung die erste Messeinheit an dem ersten Maschinenteil befestigt ist, und die zweite Messeinheit an dem zweiten Maschinenteil befestigt ist, so dass der flächig aufgeweitete Lichtstrahl parallel zur Achse des ersten Maschinenteils ausgerichtet wird und auf die Detektoreinheit auftrifft und dass
ein von dem flächig aufgeweiteten Lichtstrahl erzeugtes Lichtmuster zur Bestimmung einer Fehlausrichtung der Achsen der Maschinenteile relativ zu einander ausgewertet wird, wobei zur Bestimmung der Fehlausrichtung die Auftreffpunkte des flächig aufgeweiteten Lichtstrahls auf den Zeilensensoren verwendet werden
**dadurch gekennzeichnet, dass** die Maschinenteile durch ein Kupplungselement lose gekoppelt sind und bei einem bei einer Drehung zumindest eines der Maschinenteile auftretenden Kupplungsspiel ein Korrekturwert für die Auftreffpunkte des Lichtstrahls auf den Zeilensensoren ermittelt wird.

2. Verfahren nach Anspruch 1, **dadurch gekennzeichnet, dass**
eine dritte Messeinheit mit einer Lichtquelle zur Aussendung eines in einer Ebene aufgeweiteten Lichtstrahls
und eine vierte Messeinheit mit einer optischen Detektoreinheit, welche aus zwei parallel zueinander angeordneten Zeilensensoren besteht, verwendet werden,
wobei bei der Ermittlung die vierte Messeinheit an den ersten Maschinenteil befestigt ist, und die dritte Messeinheit an dem zweiten Maschinenteile befestigt ist, so dass der flächig aufgeweitete Lichtstrahl der Lichtquelle der dritten Messeinheit parallel zur Achse des zweiten Maschinenteils ausgerichtet wird und auf die Detektoreinheit der vierten Messeinheit auftrifft und dass
bei einer Drehung zumindest eines der Maschinenteile um seine Achse, ein von dem flächig aufgeweiteten Lichtstrahl erzeugtes Lichtmuster zur Bestimmung einer Fehlausrichtung der Achsen der Maschinenteile relativ zu einander ausgewertet wird, wobei zur Bestimmung der Fehlausrichtung die Auftreffpunkte zumindest eines der flächig aufgeweiteten Lichtstrahlen auf den Zeilensensoren verwendet werden.

3. Verfahren nach Anspruch 1 oder 2, **dadurch gekennzeichnet, dass** zur Berechnung eines Kupplungsspiels Werte eines quasilinearen Anstiegs der Auftreffpunkte des flächig aufgeweiteten Lichtstrahls als Funktion des Drehwinkels verwendet werden.

4. Verfahren nach einem der Ansprüche 1 bis 3, wobei ein Kupplungsspiels zwischen zwei gekoppelten Maschinenteilen bei einem Messroboter oder einem Koordinatenmessgerät, bestimmt wird.

5. Verfahren nach einem der vorhergehenden Ansprüche wobei zwei gekoppelten Wellen in einer Kraftübertragungseinheit, insbesondere einem Motor, einer Pumpe oder einem Getriebe, ausgerichtet werden.

6. Vorrichtung zur Durchführung des Verfahrens nach Anspruch 1,
mit einer ersten Messeinheit mit einer Lichtquelle zur Aussendung eines in einer Ebene aufgeweiteten Lichtstrahls
und einer zweiten Messeinheit mit einer optischen Detektoreinheit, welche aus zwei parallel zueinander angeordneten Zeilensensoren besteht
mit einer Auswertungseinheit, um ein von dem flächig aufgeweiteten Lichtstrahl erzeugtes Lichtmuster zur Bestimmung einer Fehlausrichtung der Achsen der Maschinenteile relativ zu einander auszuwerten, wobei zur Bestimmung die Auftreffpunkte des flächig aufgeweiteten Lichtstrahls auf den Zeilensensoren verwendet werden,
wobei die Auswertungseinheit ausgelegt ist, einem Korrekturwert für die Auftreffpunkte des Lichtstrahls auf den Zeilensensoren zu ermitteln, wobei der Korrekturwert dem Kupplungsspiel zwischen den ausrichtenden Maschinenteilen Zuzuordnen ist.

7. Vorrichtung zur Durchführung des Verfahrens nach Anspruch 2,
mit einer dritten Messeinheit mit einer Lichtquelle zur Aussendung eines in einer Ebene aufgeweiteten Lichtstrahls
und eine vierten Messeinheit mit einer optischen Detektoreinheit, welche aus zwei parallel zueinander angeordneten Zeilensensoren besteht,
Mitteln zum Anordnen der dritten und vierten Messeinheit derart, dass der flächig aufgeweitete Lichtstrahl der Lichtquelle der dritten Messeinheit auf die Detektoreinheit der vierten Messeinheit auftrifft und
die Auswertungseinheit ein von dem flächig aufgeweiteten Lichtstrahl erzeugtes Lichtmuster zur Bestimmung einer Fehlausrichtung der Achsen der Maschinenteile relativ zu einander oder zur Prüfung der Geradheit der Komponente auswertet, wobei zur Bestimmung die Auftreffpunkte zumindest eines der flächig aufgeweiteten Lichtstrahlen auf den Zeilensensoren verwendet werden.

8. Vorrichtung nach Anspruch 7, **dadurch gekennzeichnet, dass** jeweils die erste und vierte Messeinheit sowie die zweite und dritte Messeinheit fest miteinander verbunden sind.

9. Vorrichtung nach Anspruch 8, **dadurch gekennzeichnet, dass** jeweils die erste und vierte Messeinheit sowie die zweite und dritte Messeinheit jeweils in einem Messkopf angeordnet sind.

## Claims

1. Method for ascertaining an alignment of two rotatably mounted machine parts with a first measurement unit having a light source for emitting a light beam, which is widened in a plane,
and a second measurement unit having an optical detector unit, which consists of two line sensors which are arranged parallel to each other,
wherein during the ascertainment the first measurement unit is secured to the first machine part and the second measurement unit is secured to the second machine part such that the light beam, which is widened in a planar fashion, is aligned parallel to the axis of the first machine part and strikes the detector unit, and that
a light pattern, generated by the light beam, which is widened in a planar fashion, is evaluated in order to determine a misalignment of the axes of the machine parts relative to one another, wherein the points of incidence of the light beam, which is widened in a planar fashion, on the line sensors are used for determining the misalignment,
**characterized in that** the machine parts are loosely coupled by a coupling element and a correction value for the points of incidence of the light beam on the line sensors is ascertained for a coupling play occurring in the case of a rotation of at least one of the machine parts.

2. Method according to Claim 1, **characterized in that**
a third measurement unit having a light source for emitting a light beam, which is widened in a plane,
and a fourth measurement unit having an optical detector unit, which consists of two line sensors which are arranged parallel to each other, are used,
wherein during the ascertainment the fourth measurement unit is secured to the first machine part and the third measurement unit is secured to the second machine part such that the light beam, which is widened in a planar fashion, of the third measurement unit is aligned parallel to the axis of the second machine part and strikes the detector unit of the fourth measurement unit, and that
if at least one of the machine parts rotates about its axis, a light pattern, generated by the light beam, which is widened in a planar fashion, is evaluated in order to determine a misalignment of the axes of the machine parts relative to one another, wherein the points of incidence of at least one of the light beams, which are widened in a planar fashion, on the line sensors are used for determining the misalignment.

3. Method according to Claim 1 or 2, **characterized in that** values of a quasi-linear increase of the points of incidence of the light beam, which is widened in a planar fashion, as a function of the rotation angle are used to calculate a coupling play.

4. Method according to one of Claims 1 to 3, wherein a coupling play between two coupled machine parts in a measurement robot or a coordinate measuring machine is determined.

5. Method according to one of the preceding claims, wherein two coupled shafts in a power transfer unit, in particular a motor, a pump or a transmission, are aligned.

6. Apparatus for carrying out the method according to Claim 1,
having a first measurement unit having a light source for emitting a light beam, which is widened in a plane,
and a second measurement unit having an optical detector unit, which consists of two line sensors which are arranged parallel to each other,
having an evaluation unit in order to evaluate a light pattern, generated by the light beam, which is widened in a planar fashion, in order to determine a misalignment of the axes of the machine parts relative to one another, wherein the points of incidence of the light beam, which is widened in a planar fashion, on the line sensors are used for determining the misalignment, wherein the evaluation unit is adapted to ascertain a correction value for the points of incidence of the light beam on the line sensors, wherein the correction value is to be assigned to the coupling play between the machine parts to be aligned.

7. Apparatus for carrying out the method according to Claim 2,
having a third measurement unit having a light source for emitting a light beam, which is widened in a plane, and a fourth measurement unit having an optical detector unit, which consists of two line sensors which are arranged parallel to each other,
having means for arranging the third and fourth measurement units such that the light beam, which is widened in a planar fashion, from the light source of the third measurement unit strikes the detector unit of the fourth measurement unit and
the evaluation unit evaluates a light pattern, generated by the light beam, which is widened in a planar fashion, in order to determine a misalignment of the axes of the machine parts relative to one another, or to check the straightness of the component, wherein the points of incidence of at least one of the light beams, which are widened in a planar fashion, on the line sensors are used for the determination.

8. Apparatus according to Claim 7, **characterized in that** in each case the first and fourth measurement units and the second and third measurement units are respectively fixedly connected to each other.

9. Apparatus according to Claim 8, **characterized in that** in each case the first and fourth measurement units and the second and third measurement units are respectively arranged in a measurement head.

## Revendications

1. Procédé de détermination d'un alignement de deux pièces mécaniques disposées de manière rotative comprenant une première unité de mesure comportant une source de lumière destinée à émettre un faisceau lumineux s'élargissant dans un plan
et une deuxième unité de mesure comprenant une unité de détection optique qui est constituée de deux capteurs linéaires agencés parallèlement l'un à l'autre,
dans lequel, lors de la détermination, la première unité de mesure est fixée à la première pièce mécanique et la deuxième unité de mesure est fixée à la deuxième pièce mécanique de telle manière que le faisceau lumineux élargi de manière bidimensionnelle soit aligné parallèlement à l'axe de la première pièce mécanique et soit incident sur l'unité de détection et
qu'un motif lumineux généré par le faisceau lumineux s'élargissant de manière bidimensionnelle soit évalué pour déterminer un défaut d'alignement des axes des pièces mécaniques, dans lequel, pour déterminer le défaut d'alignement, on utilise les points d'incidence du faisceau lumineux s'élargissant dans un plan sur les capteurs linéaires,
**caractérisé en ce que** les pièces mécaniques sont faiblement couplées par l'intermédiaire d'un élément de couplage et **en ce qu'**une valeur de correction des points d'incidence du faisceau lumineux sur les capteurs linéaires est déterminée lors d'un jeu de couplage se produisant lors d'une rotation d'au moins une pièce mécanique.

2. Procédé selon la revendication 1, **caractérisé en ce qu'**on utilise une troisième unité de mesure comprenant une source de lumière destinée à émettre un faisceau lumineux s'élargissant dans un plan et une quatrième unité de mesure comprenant une unité de détection optique qui est constituée de deux capteurs linéaires agencés parallèlement l'un à l'autre,
dans lequel, lors de la détermination, la quatrième unité de mesure est fixée à la première pièce mécanique et la troisième unité de mesure est fixée à la deuxième pièce mécanique de manière à ce que le faisceau lumineux s'élargissant de manière bidimensionnelle de la source de lumière de la troisième unité de mesure soit aligné parallèlement à l'axe de la deuxième pièce mécanique et soit incident sur l'unité de détection de la quatrième unité de mesure, et **en ce que**,
lors d'une rotation d'au moins une pièce mécanique autour de son axe, un motif lumineux généré par le faisceau lumineux s'élargissant de manière bidimensionnelle soit évalué pour déterminer un défaut d'alignement des axes des pièces mécaniques les uns par rapport aux autres, dans lequel, pour déterminer le défaut d'alignement, on utilise les points d'incidence d'au moins l'un des faisceaux lumineux s'élargissant de manière bidimensionnelle sur les capteurs linéaires.

3. Procédé selon la revendication 1 ou 2, **caractérisé en ce que** pour calculer un jeu de couplage, on utilise des valeurs d'une croissance quasi-linéaire des points d'incidence du faisceau lumineux s'élargissant de manière bidimensionnelle en fonction de l'angle de rotation.

4. Procédé selon l'une quelconque des revendications 1 à 3, dans lequel un jeu de couplage entre deux pièces mécaniques couplées est déterminé dans un robot de mesure ou dans un appareil de mesure de coordonnées.

5. Procédé selon l'une quelconque des revendications précédentes, dans lequel deux arbres couplés sont alignés dans une unité de transmission de force, notamment un moteur, une pompe ou une transmission.

6. Dispositif destiné à mettre en oeuvre le procédé selon la revendication 1,
comprenant une première unité de mesure comportant une source de lumière destinée à émettre un faisceau lumineux s'élargissant dans un plan
et une deuxième unité de mesure comprenant une unité de détection optique qui est constituée de deux capteurs linéaires agencés parallèlement l'un à l'autre, comportant une unité d'évaluation destinée à évaluer un motif lumineux généré par le faisceau lumineux s'élargissant de manière bidimensionnelle pour déterminer un défaut d'alignement des axes des pièces mécaniques les uns par rapport aux autres, dans lequel, pour la détermination, on utilise les points d'incidence du faisceau lumineux s'élargissant de manière bidimensionnelle sur les capteurs linéaires, dans lequel l'unité d'évaluation est apte à déterminer une valeur de correction des points d'incidence du faisceau lumineux sur les capteurs linéaires, la valeur de correction devant être associée au jeu de couplage entre les pièces mécaniques à aligner.

7. Dispositif destiné à mettre en oeuvre le procédé selon la revendication 2,
comprenant une troisième unité de mesure comportant une source de lumière destinée à émettre un faisceau lumineux s'élargissant dans un plan
et une quatrième unité de mesure comportant une unité de détection optique qui est constituée de deux capteurs linéaires agencés parallèlement l'un à l'autre,
des moyens destinés à agencer les troisième et quatrième unités de mesure de manière à ce que le faisceau lumineux s'élargissant de manière bidimensionnelle de la source de lumière de la troisième unité de mesure soit incident sur l'unité de détection de la quatrième unité de mesure, et
l'unité d'évaluation évalue un motif lumineux généré par le faisceau lumineux s'élargissant de manière bidimensionnelle pour déterminer un défaut d'alignement des axes des pièces mécaniques les uns par rapport aux autres ou pour vérifier la rectitude des composants, dans lequel, pour la détermination, on utilise les points d'incidence d'au moins l'un des faisceaux lumineux s'élargissant de manière bidimensionnelle sur les capteurs linéaires.

8. Dispositif selon la revendication 7, **caractérisé en ce que** les première et quatrième unités de mesure ainsi que les deuxième et troisième unités de mesure sont respectivement reliées les unes aux autres de manière fixe.

9. Dispositif selon la revendication 8, **caractérisé en ce que** les première et quatrième unités de mesure ainsi que les deuxième et troisième unités de mesure sont respectivement agencées dans une tête de mesure.
